(19) Europäisches Patentamt European Patent Office Office européen des brevets

(11) **EP 4 021 790 B1**

(12) **EUROPEAN PATENT SPECIFICATION**

(45) Date of publication and mention
of the grant of the patent:
**13.09.2023 Bulletin 2023/37**

(21) Application number: **20753667.3**

(22) Date of filing: **08.07.2020**

(51) International Patent Classification (IPC):
**B62M 1/10** $^{(2010.01)}$      **B62M 9/08** $^{(2006.01)}$

(52) Cooperative Patent Classification (CPC):
**B62M 9/08; B62M 1/105;** Y02T 10/72

(86) International application number:
**PCT/BG2020/000027**

(87) International publication number:
**WO 2021/146780 (29.07.2021 Gazette 2021/30)**

(54) **AUTOMATIC CYCLIC TRANSMISSION**

AUTOMATISCHE ZYKLISCHE ÜBERTRAGUNG

TRANSMISSION CYCLIQUE AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2020 BG 11306820**

(43) Date of publication of application:
**06.07.2022 Bulletin 2022/27**

(73) Proprietor: **Ilova, Katerina Valentinova
2050 Ihtiman (BG)**

(72) Inventor: **Ilova, Katerina Valentinova
2050 Ihtiman (BG)**

(74) Representative: **Ilieva, Angelina Stanimirova
2 Nikolay Haytov Str., ent. G, fl. 5, Apt. 13
1113 Sofia (BG)**

(56) References cited:
**EP-A1- 0 380 828    FR-A1- 2 944 772
US-A- 522 427    US-A- 4 836 046**

## Description

## Field of Invention

The invention relates to automatic cyclic transmission, which will find application in the field of vehicles, which are driven by muscle force and more particularly in the field of bicycles, but may find application in other fields, where conditions of use are met.

## Background

In practice, the chain transmissions are used to transmit torque in many devices and have become popular in the broad market due to their relatively simple construction and high reliability. This type of transmissions most often consists of two shafts, on which sprockets are mounted, connected with a chain. In principle, these transmissions are divided into two main categories - fixed and variable.

The fixed transmissions from the first category have a constant (fixed) gear ratio and are popular due to the simplicity of construction and reliability. They are also the most popular on bicycles because most users under real conditions thinks, that gear shifting is slow and complicated or is incomprehensible action at all. In fact, a very small cyclists percentage are able to manage adequately gear shifting, so as to achieve the optimum balance between the desired physical exertion, speed and changing terrain situations, and therefore they are tend to make significant compromises and not to apply gears even if they have them installed to do that.

The optimal application of the chain transmissions requires in fact a change of the gear ratio between the driving and driven shaft according to the conditions and the possibilities of the propulsion force determines usage of variable transmissions. The typical situations, that require this, are starting, acceleration, terrain denivelation or maneuvering (cornering, lane change, slalom, etc.).

The first and most popular group in the category of variable transmissions are those, which use the derailleur for shifting the gears. The principle of action for switching between a set of sprockets (driving and driven) through the derailleur is relatively simple. For this type of variable transmissions, the gears are manually selected by the user, where the derailleur transfers the chain to the selected sprockets and then the gear ratio remains fixed according to that choice until next change. So, in order to switch between two desired gears combinations, the derailleur moves the chain successively through the sequential cogs in the given set. Thus, to achieve the desired, adequate, and optimal gear in this group of variable transmissions, may take a considerable time and if the situation varies more dynamically, then the change becomes ineffective or makes no sense. In that case the increasing number of combinations between the driving chainwheel(s) and driven sprockets, also increasing the problem of choosing an optimal gear. Moreover, the wide variety of gears is rather unusable in real terms at the endpoints due to the significant angular deviation of the chain line, which leads to extreme wearing of the sprockets and the chain. The big difference in the radiuses of the chainwheels, in case of rapid and frequent switching under load has a shock-hopping effect, causing considerable discomfort and is not only unsuitable for practical use, but can simply destroy the transmission in a very short term. In addition, the variable transmissions with derailleur have a demanding setting and maintenance.

The second most popular group of variable transmissions are the so-called gear hubs, which are based on toothed gears and/or ratchet mechanisms. The most common are the gear hubs mounted in the rear wheel hub, but there are also such, which are intended for mounting as a mid-drive (often combined with motor). Usually these solutions suffer from a limited range of gear ratios/range and have a complex and expensive construction, wherein their reliability is not at the required level, and the maintenance is more difficult.

The third group of existing solutions in the variable transmission category are working by gearing the chain on moving segments, that shrink or expand around the central axis, so that the formed circle (driving, driven, or both) provides a change of the gear ratio. The change can be manual or automatic through a mechanism designed for this purpose. The displacement is by slots, mandrel or by cogs rotating around axes, located around the central axe. The construction of this group of solutions inevitably implies empty spaces during the expanding of the segments, wherein the more the extension is and the less are the elements, the more these spaces increase and cause uneven operation and overloading of small sections of the chain, which leads to uneven movement and higher wearing. In addition, shifting from one gear ratio to another is typically slowed by at least one turnover needed to align all segments of a particular orbit.

From JP5522539 is known an automatic transmission, including a guiding bases with a central opening for mounting to a driving gear. To the one guiding base is connected a gear wheel with a central working opening, as well as an additional guiding base. In each of the guiding bases are formed appropriate pairs of slots. On the additional guiding base are located pins, to which are connected a tension springs. The known automatic transmission from JP5522539 switches the gear ratio only when the arm (in this case the crank of pedals) is in a horizontal position, which is leading to lose of the efficiency of the gear. The positioning of the tension springs can only provide an equilibrium, but not a threshold effort level, which means that even the smallest force applied to any of the possible directions of movement will lead to displacement, whereby this known transmission will slide (intermittent at any 90°) at any force applied other than zero (i.e. even during pedaling on a flat surface). Therefore, the effectiveness of the gear is lost and the same does not bring real benefit to the cyclists. In addition, the known solution does not correspond in any way to the phases of the real working cycle of chain bicycle transmission driven by muscular force from both legs of a human and thus have a limited application in this field. Document US522427A shows the preamble of claim 1.

**Summary of the invention**

The object of the present invention is to provide a transmission, in which the driving chainwheel automatically, smoothly and steplessly is changing the transmission ratio at a defined phase of the work cycle depending on the load, so that the applied effort to be minimized, without altering the geometry of the driving chainwheel.

Another objective is to be ensured a comfortable use in variable situations by minimizing the effort applied in predetermined limits, corresponding to the actual work cycle of the cycle chain transmission, which at the same time to be efficiently and immediately carried out automatically while the construction of the transmission to be highly reliable and easy for service.

The object of the invention is accomplished by an automatic cyclic transmission mechanism, including a guiding base with a central bore for mounting to the crank of the driving axle. A chainwheel with a central working opening is attached to this guiding base.

According to the present invention, the guiding base has four guiding slots and a pair of parallel spring windows. The guiding slots are arranged symmetrically around the central bore of the guiding base. The first of the guiding slots is formed above the central bore of the guiding base, and each subsequent is positioned parallel to the direction of the previous one and is circumferentially shifted by 90° compared to the previous one. The spring windows of the guiding base are shaped on both sides of the central bore of the guiding base, so that they are positioned parallel to the guiding slots. The chainwheel also has a pair of the same size parallel spring windows and according mounting bores. In the guiding slots are positioned movably guiding rollers, mounted by fastening means to the corresponding connection bores of the chainwheel. In the corresponding spring windows of the chainwheel and the guiding base are mounted damper springs on guiding mandrels by sliding bushings. The guiding slots and spring windows have an equal length.

The automatic cyclic transmission, according to the present invention, vary the gear ratio without changing the geometry of the driving chainwheel or the guiding base, but by shifting of the driving chainwheel relative to the center of rotation of the guiding base at optimal moment of the work cycle. The automatic cyclic transmission has a simple construction with few elements, which on one side is making it easier for maintenance, and on the other the weight of the whole vehicle is reduced, and it becomes more convenient to operate.

**Brief description of the drawings**

In more details, the automatic cyclic transmission, according to the present invention, is clarified on the accompanying figures, wherein:

On figure 1 is presented an exploded-view drawing of the automatic cyclic transmission;
On figure 2 is presented the automatic cyclic transmission in centered position i.e. during normal motion under load, which is not exceeding the set threshold value (e.g. evenly established movement on a flat terrain);
On figure 3 is presented the automatic cyclic transmission in working position, i.e. during movement with a load, exceeding the set threshold value and causing a shift of the transmission ratio;
On figure 4 is presented a schematic diagram of the work cycle of the automatic cyclic transmission.

**Examples**

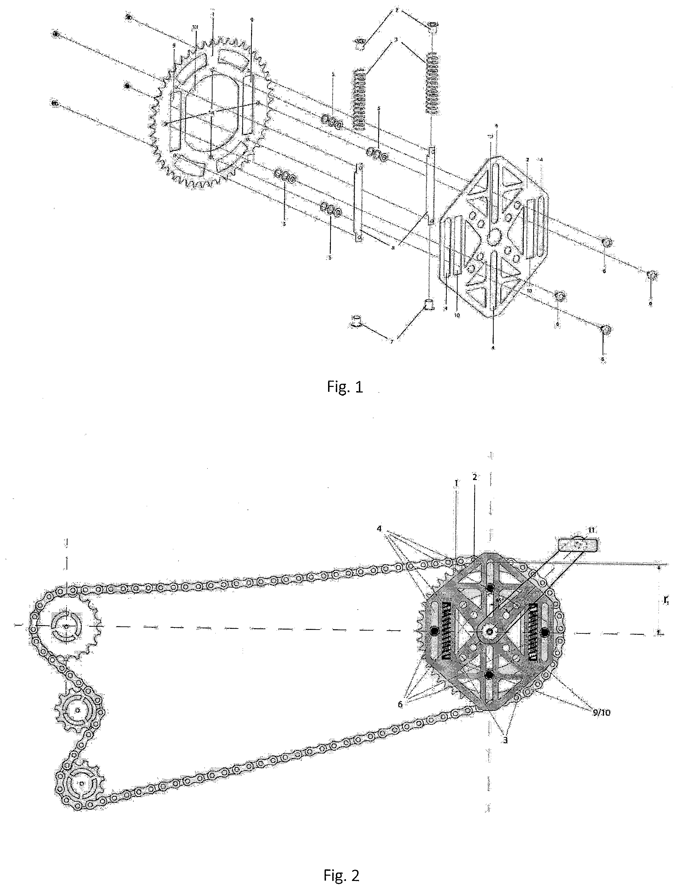

In Figures 1, 2 and 3 is presented an exemplary embodiment of the automatic cyclic transmission, according to the present invention, which includes a guiding base 2 with a central bore 12 for mounting to crank 11, which usually for the bicycles is connected to the driving axle. To the guiding base 2 is mounted a chainwheel 1 with a central working opening 13. The guiding base 2 has four guiding slots 4 and a pair of parallel spring windows 10. The guiding slots 4 are arranged symmetrically around the central bore 12. The first of the guiding slots 4 is shaped above the central bore 12, and each subsequent is positioned parallel to the direction of the previous and is circumferentially shifted by 90° compared to the previous one. The spring windows 10 of the guiding base 2 are shaped on both sides on the central bore 12, so they are positioned parallel to the guiding slots 4. The chainwheel 1 also has a corresponding pair of spring windows 9 and multiple connection bores 14. In the guiding slots 4 are located movable guiding rollers 5, mounted by the fastening means 6 to the connection bores 14 of the chainwheel 1. In the spring windows 9 and 10 respectively on the chainwheel 1 and the guiding base 2 by sliding bushings 7 on the guiding mandrels 8 are mounted damper springs 3. Guiding slots 4 and spring windows 9 and 10 have equal length.

**Use of the Invention**

For a better understanding of how the automatic cyclic transmission is working, first we will need to analyze the operation of the fixed rotary chain cycling transmission, i.e. the well-known classical combination of chainwheel fitted on the axle in a suitable for a cyclist point of the frame, comprising pedals with cranks fastened to this axle, driving the sprocket mounted on the rear wheel axle connected by a chain. The operation of the standard transmission is based on classical mechanics, in which there is a six simple machines like "wheel and axle". The standard bicycle drive is considered as a compound machine or system of wheels or essentially of the levers of a class 1 (guided sprocket) and the lever of a class 2 (crank and driving chainwheel). Thus a significant torque is achieved providing a sufficient mechanical advantage to the cyclist to overcome the resistance force of the total weight of the system (bicycle, cyclist and load) while moving the system with the effort that can exert.

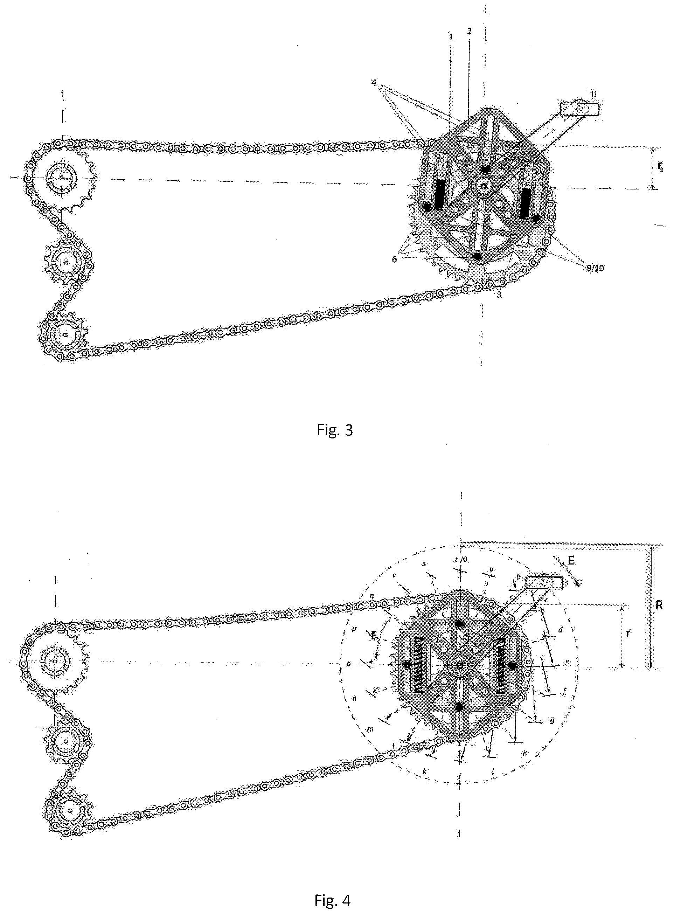

For the description of the mode of action of the current invention, we can confine ourselves to examining not the whole system of levers and forces, but only that part that includes that automatic cyclic transmission. In this case, we can assume that, under equal conditions, the effort applied will depend on the component that changes. On figure 4 is shown visually the operating cycle of the automatic cyclic transmission, which can be described in total by the following formulae:

$$E = \frac{r}{R}F \text{ or } \frac{E}{F} = \frac{r}{R}$$

wherein:

E - is the force, driving the automatic cyclic transmission, i.e. the pressure exerted by the cyclist on the pedal in the upper part of the driving lever arm which in this case is the crank 11 of the bicycle;
F - is the force of the resistance by the weight of the load of the system, i.e, the force with which the chain is pulling backward the chainwheel 1;
R - is the radius (lever arm) of driving chainwheel crank on which the propulsion force is applied or radius of the virtual circle, describing the point of attachment of the pedal to the crank, i.e. the point where the cyclist effort is exerted;
r - is the radius (lever arm) of the wheel on which the load resistance acts, i.e. the radius of the chainwheel 1, at which the resistance of the system is transmitted by the chain connected to it.

The same can be represented by the equations of the lever of the class 1 and the lever of the class 2. In particular, with the automatic cyclic transmission, we look at the system (crankarm 11 - chainwheel 1) as a class 2 lever, where $l1$ is the arm of the crank, and 12 is the radius (the arm from center to end) of the chainwheel 1. in condition of the lever equilibrium the following is obtained:

$$F1 * l1 = F2 * l2$$

from where the ratio is derived:

$$\frac{F1}{F2} = \frac{l2}{l1} \text{ or } F1 = \frac{l2}{l1} * F2$$

wherein

F - is the appropriate force applied
$l$ - is the arm on, which the appropriate force acts

The effort E from Fig. 4, which the cyclist applies to achieve a mechanical advantage on equal other factors depends on the r/R ratio between the radius r of the driving chainwheel 1 and the R arm (virtual radius) of the crank arm. The same concerns to the applied force F1, which depends on the $l2/l1$ ratio between the arm $l2$ (the radius of the gear wheel 1) to the arm 11 (crank arm).

During the dynamic action of the automatic cyclic transmission it is subject to changes depending on the vector of action of the forces, but they do not change the validity of these equations. The size (circumference) of the sprockets or the number of teeth in a standard transmissions are derived from the levers dependencies shown above, i.e. these are partial cases that are only applicable when we have a circular gear movement around a fixed center. For illustration, the work cycle of the standard rotary bicycle chain transmission, shown in Fig. 4 is divided into phases *a ÷ t*.

The phases *a ÷ t* of action of the cycle are determined by the anatomical features of the human in interaction with the mechanism of the bicycle transmission. At a first glance it looks like that the positive work cycle for the right leg is from pos. *b* to pos. *l*, (i.e. almost 180°), our subjective perception and the possibility of applying a substantial force (without standing up on the pedals) narrow the effective range between pos. *c* and pos. *i* (i.e. around 100 ÷ 110°), but the area which determine the most efficient working range is between pos. *c* and pos. *g* (i.e. only 70 ÷ 80°). In fact, at city bikes, the comfort zone with the outmost importance is precisely between pos. *c* and pos. *g*.

In addition, it is apparent from figure 4, that the chain transmission only works in the area above the horizontal line passing through the centers of the guiding and the guided sprockets, i.e. the upper end of the chain is strained and in the lower loose. This is determined by the average vector of the forces, transmitted through the chain between guiding and the guided sprockets. These zones are located between the points of engagement of the sprockets and the vector of the action of the respective force (resistance or propulsion), i.e. between 0° and 90° for the guiding sprocket and between 270° and 0° for the guided sprocket. This zone of mechanical action of the chain of the guiding sprocket is included in the abovementioned zones and is within the most efficient biometric operating range defined. The most loaded area is even narrower and is between pos. *c* and pos. *f* from Fig. 4 or 50 ÷ 60°, and the exact position depends on the radius (considered as arm) of the guiding chainwheel in a certain moment.

The automatic cyclic transmission is presented schematically in the general view of Fig. 1, from where it is apparent that the construction consist of only three main elements - the chainwheel 1, mounted on the guiding base 2 and damper springs 3, which are joined with the corresponding fastening means. The guiding base 2 is connected through its central bore to the crank, which in Fig. 1 is the crank 11, the same in his turn is mounted (in a corresponding standard way) on the axle of the bicycle. The essence of the present invention is that the change of the gear ratio between the guiding and the guided sprocket is done by shifting the arm r on the chainwheel 1 only in the phase between pos. *c* and pos. *f* of the work cycle when the applied load exceeding the set threshold value. The automatic action is guaranteed by the preset values of the damper springs 3, and the limits of action are determined by the guiding slots 4, which slide the guiding rollers 5, mounted by the fastening means 6, fixed to the chainwheel 1, in order to ensure the integrity of the structure.

The movement in the guiding slots 4 on the guiding base 2 is based on two forces - tension exerted by the resistance transmitted by the chain and the force of the damper springs 3. To this should be added the vector of action of the two forces, which intersect at the fastening point of the guide rollers 5 by the fastening means 6. Moving in the guiding slots 4 becomes possible when the tensile angle is less than 90° to the vector of action of the damper springs 3, which matches with the longitudinal axis of the guiding slots 4. In the standard case, when the guiding chainwheel has a larger radius than the guided sprocket, this condition is met even before pos. *t.* in Fig. 4.

In an event pedaling with low loading and effort less than the trigger value determined by the pre-tensioning of the damper springs 3, the automatic cyclic transmission shall operate as a classic fixed gear without requiring any shifting action.

The automatic cyclic transmission can be placed without any adaptation on the bottom bracket axle of the most existing bicycles, applying the corresponding standard coupling. The highest degree of compatibility has the bicycles for use in urban conditions (city bikes, commuter bikes, urban bikes). The rear hub can remain with the existing cassette/derailleur/hub, which can be used to improve further the efficiency. On the rear axis can be mounted a standard free movement sprocket (Freewheel) and a chain tensioner underside, which will further simplify and lighten the structure in general.

The automatic cyclic transmission works in the following way

On the Fig. 2. the automatic cyclic transmission is shown in neutral position from the side of the chainwheel 1 (driving gear wheel), which is at steady-state (centered to axis) position, when no force is applied or it is under the set threshold limit, i.e. it works as a standard fixed gear. In this case, the guiding rollers 5 of the fastening means 6 are located in the middle of the guiding slots 4. The damper springs 3 are mounted symmetrically on both sides of the central axis through the sliding bushings 7 on the guiding mandrels 8 in the spring windows 9 on the chainwheel 1 and the spring windows 10 on the guiding base 2. The spring windows 9 on the chainwheel 1 have the same length as the guiding slots 4 and the spring windows 10 in the guiding base 2. This allows for automatic maintenance of the balanced centered position of the two main elements (guiding base 2 and chainwheel 1) through the pre-tensioning of the damper springs 3, the action is being carried in both directions with a smooth passing through the balancing position. The pre-tensioning of the damper springs 3 also determines the limit minimum value of the pedal force, which triggers the shifting of gear ratio and must be selected according to the capabilities and preferences of the cyclist. The same shall apply to the force of springs which may be selected to correspond to the strength and style of the cyclist.

By the angle position of driving arm, which in the case of Fig. 2 is the crank 11, is set the operating range of the automatic cyclic transmission. This position must match optimally with the maximum cycle work point of the human power. The position of the guiding base 2 in Fig. 2 is considered null and the standard position for the crank assembly is set at 45° to the vertical passing through the axle. This position ensures that the optimal cyclist effort zone matches with the area of action of the shifting described above. Of course, it is possible that the crank position is changed in some minimum limits ($\pm$ 5°) to better adapt to individual preferences, but calculations and tests show that the standard position provides optimum results.

In Fig. 3 the automatic cyclic transmission is shown in a state in which the guiding rollers 5 with the fastening means 6 are located at the end of the guiding slots 4 when the applied force exceeds the limits of change or conditionally speaking when a bottom dead center of the transmission is reached. The damper springs 3 are maximally compressed on the guiding mandrels 8 between the corresponding edges of the spring windows 9 on the chainwheel 1 and the spring windows 10 of the guiding base 2. The maximum compression of the damper springs 3 between the opposite edges of the guiding slots 4 is achieved at the end of the guiding slots 4 and determines the limit of maximum adjustable value of the pedal effort, and after this point it is not adjustable. The position on the diagram is symbolically diverted only by 5° from the zero vertical line, because even such move allows full displacement of the chainwheel 1 to the central axis of rotation of the guiding base 2, i.e. able to reach the bottom dead center, according to the defined above condition for action, determined by the vector of the current forces. This results in effective shifting of the lever arm r between the two values r1 and r2, respectively, indicated in Fig. 2 and Fig. 3. and the appropriate mechanical advantage is achieved automatically or it is obtained the more recognizable term "gear ratio change".

The described action is repeated twice symmetrically in the work cycle of the present automatic cyclic transmission since the action applies both to the right and to the left human leg. Moreover, the transmission, according to the present invention, allows the expansion of the useful action, since the accumulated energy for contraction of the damper springs 3 in the active phase is not wasted, but recovered latter on. Loop tracking indicates that the drive force applied at the end of the device's operating cycle becomes weaker than the accumulated energy. This happens around pos. *g* - *h* in Fig. 4 and logically the springs push out the chainwheel 1 to the equilibrium center position. The vector of this movement at this point is opposite to the chain resistance vector and is in one direction with the vector of the applied propulsion force. Therefore, this energy is added to the propulsion force.

## Claims

1. Automatic cyclic transmission, comprising a guiding base with a central bore for mounting to an axle, whereby a chainwheel with a central working opening is attached to the guiding base, **characterized in, that** the guiding base (2) has four guiding slots (4) and a pair of parallel spring windows (10), wherein the guiding slots (4) are arranged symmetrically around the central bore (12) so that the first of the guiding slots (4) is shaped above the central bore (12) and each subsequent one is positioned parallel to the direction of the previous one and is circumferentially shifted by 90° compared to the previous one, in which the spring windows (10) of the guiding base are shaped on the both sides of the central bore (12), so that they are positioned parallel to the guiding slots (4), and the chainwheel (1) also has a pair of parallel spring windows (9) and multiple connection bores (14), wherein in the guiding slots (4) are positioned movably guiding rollers (5), mounted by the fastening means (6) to the connection bores (14) of the chainwheel (1) and in the spring windows (9, 10), respectively of the chainwheel (1) and of the guiding base (2) by sliding bushings (7) on guiding mandrels (8) are mounted damper springs (3), wherein the guiding slots (4) and the spring windows (9, 10) are having equal length.

## Patentansprüche

1. Automatische zyklische Übertragung mit einem Führungssockel, der eine Zentralbohrung zur Montage an einem Aktuator aufweist, wobei ein Zahnrad mit einer Betriebszentralbohrung mit dem Führungssockel gekoppelt ist, **dadurch gekennzeichnet, dass** der Führungssockel (2) vier Führungsrinnen (4) und ein Paar parallele Federnuten (10) aufweist, wobei die Führungsrinnen (4) symmetrisch auf einem Kreis um die Zentralbohrung (12) angeordnet sind, so dass die erste der Führungsrinnen (4) oberhalb der Zentralbohrung (12) ausgebildet ist, und jede nachfolgende parallel zur Richtung der vorhergehenden angeordnet ist und im Kreis um 90° gegenüber der vorhergehenden versetzt ist, wobei die Federnuten (10) beiderseits der Zentralbohrung (12) ausgebildet sind und so also parallel zu den Führungsrinnen (4) angeordnet werden, und das Zahnrad (1) ebenfalls ein Paar parallele Federnuten (9) und eine Vielzahl von Anschlußlöchern (14) aufweist, wobei in den Führungsrinnen (4) Führungsrollen (5) beweglich angeordnet sind, die mittels Anschlußelementen (6) an den Anschlußlöchern (14) des Zahnrads (1) montiert sind, und in den Federnuten (9, 10), beziehungsweise in dem Zahnrad (1) und in dem Führungssockel (2) mittels Gleitbüchsen (7) auf Führungsdornen (8) Ausgleichsfedern (3) montiert sind, wobei die Führungsrillen (4) und die Federnuten (9, 10) die gleichen Längen aufweisen.

## Revendications

1. Transmission cyclique automatique, comportant un support de guidage avec un alésage central pour le montage d'un essieu, selon laquelle une roue à chaîne avec une ouverture centrale est fixée au support de guidage, **caractérisée en ce que** le support de guidage (2) comporte quatre fentes de guidage (4) et une paire de fenêtres à ressort (10) parallèles, les fentes de guidage (4) étant disposées symétriquement autour de l'alésage central (12) de sorte qu'une première des fentes de guidage (4) est formée au-dessus de l'alésage central (12) et chacune des suivantes est positionnée parallèlement à la direction de la précédente en étant décalée en circonférence de 90° par rapport à la précédente, les fenêtres à ressort (10) du support de guidage étant formées aux deux côtés de l'alésage central (12) de sorte qu'elles sont positionnées parallèlement aux fentes de guidage (4), et la roue à chaîne (1) comporte aussi une paire de fenêtres à ressort (9) parallèles et plusieurs trous de fixation (14) dans lesquels des rouleaux de guidage mobiles (5) sont positionnés à l'intérieur des fentes de guidage (4) en étant montés par un moyen de fixation (6) dans les trous de fixation (14) de la roue à chaîne (1), et des amortisseurs à ressort (3) sont montés dans les fenêtres à ressort (9, 10) respectivement de la roue à chaîne (1) et du support de guidage (2) par des douilles coulissantes (7) sur des mandrins de guidage (8), les fentes de guidage (4) et les fenêtres à ressort (9, 10) ayant une égale longueur.

Fig. 1

Fig. 2

Fig. 3

Fig. 4

## REFERENCES CITED IN THE DESCRIPTION

**Patent documents cited in the description**

- JP 5522539 B

- US 522427 A